# EUROPEAN PATENT APPLICATION

(11) **EP 4 451 055 A1**
(43) Date of publication of application: **23.10.2024**
(21) Application number: 22911782.5
(22) Date of filing: 16.12.2022
(51) Int. Cl.: G03B 11/04, G03B 30/00, H04N 23/57, G06F 1/16

(54) **DISPLAY DEVICE**

(30) Priority: 20.12.2021 KR 20210182388
(71) Applicant: LG Electronics Inc., Yeongdeungpo-gu Seoul 07336 (KR)
(72) Inventor: KWON, Ohkwan, Seoul 06772 (KR); CHO, Doochan, Seoul 06772 (KR); HONG, Changsung, Seoul 06772 (KR); OH, Sangguel, Seoul 06772 (KR); PARK, Jinho, Seoul 06772 (KR)
(74) Representative: Schornack, Oliver
(86) International application number: PCT/KR2022/020572
(87) International publication number: WO 2023/121149

(57) **Abstract**

The present invention relates to a display device having a camera module that is of a slim design and positioned on the upper portion of a display. According to the present invention, a display device may be provided, the display device comprising: a display unit; a frame-type cabinet located in the periphery of the display unit and including a camera seating portion that is recessed in the upper portion thereof; and a camera module inserted into the camera seating portion, wherein the camera module comprises: a camera body including a front portion located on the front upper portion of the display unit, an upper portion on the camera seating portion, and a rear portion extending downward from the rear end of the upper portion and located in the rear direction of the display unit; a camera substrate seated on the front side of the front portion of the camera body; and a camera element in which the camera substrate is mounted, wherein the front side of the front portion includes an inclination surface tilted downward, and the camera element captures an image of an obliquely downward direction.

## Description

### [Technical Field]

The present disclosure relates to a display device, and more specifically, to a display device equipped with a slim-designed camera module located on top of a display.

### [Background]

As an information society develops, a demand for a display device is increasing in various forms. In response to the demand, in recent years, the display device includes a liquid crystal display (LCD) device, a field emission display (FED) device, a plasma display panel (PDP), an electroluminescence device, and the like.

A liquid crystal panel of the liquid crystal display device may include a liquid crystal layer, and a TFT substrate and a color filter substrate that face each other with the liquid crystal layer interposed therebetween, and may display an image using light provided from a backlight unit.

As an example of the electroluminescence device, an active matrix-type organic light emitting display device is commercially available. Because the organic light emitting display device is a self-luminous device, the organic light emitting display device has no backlight and has advantages in terms of a speed and a viewing angle compared to the liquid crystal display device, so that the organic light emitting display device is attracting attention as a next-generation display.

Recently, an ultra-thin display device may be provided because a material such as the OLED is self-luminous without the backlight structure on the rear, and a display device with a larger screen is emerging as a size of a bezel is reduced.

As a use of the display device has become more diverse, the display device is being used as a means for two-way communication rather than simply as a means of providing information at a fixed location. Accordingly, a need for a display device that may easily change in location or vertical level and is equipped with a camera or a microphone module as an input means is increasing.

### [Summary]

### [Technical Problem]

The present disclosure is to provide a display device, and more specifically, a display device with a slim-design camera module located on top of a display.

### [Technical Solutions]

According to one aspect of the present disclosure to achieve the above purpose, provided is a display device including a display module, a frame-shaped cabinet located around the display module and including a camera seating portion concavely recessed in an upper portion, and a camera module seated on the camera seating portion, wherein the camera module includes a camera body including a front portion located on an upper portion of a front surface of the display module, an upper portion of the camera seating portion, and a rear portion extending downward from a rear end of the upper portion and located in a direction of a rear surface of the display module, a camera board seated on a front surface of the front portion of the camera body, and a camera element where the camera board is mounted, wherein the front surface of the front portion includes an inclined surface inclined downward, allowing the camera element to capture an image diagonally downward.

The display device may further include a main board located on the rear surface of the display module, and a connection cable having one end coupled to the camera board, extending along an inner surface of the camera body, and connected to the main board.

The display device may further include a security cover coupled to the camera body from above and covering the front portion, the upper portion, and the rear portion, and the security cover may be movable in a horizontal direction of the camera body and selectively cover a front surface of the camera element.

The display device may further include a ferromagnetic body located in the security cover, and a magnet located in the rear portion of the camera body and providing an attractive force to the ferromagnetic body, and the magnet may include a first magnet coupled to the ferromagnetic body at a location where the security cover covers the camera element, and a second magnet coupled to the ferromagnetic body at a location where the security cover exposes the camera element.

The security cover may include a low-friction tape attached to a surface thereof in contact with the camera body.

The cabinet may include cabinet side surfaces located around side surfaces of the display module and a cabinet rear surface bent from the side surfaces and located on the rear surface of the display module, and the camera module may include a camera bracket having an upper portion coupled to the camera body and located on a rear surface of the cabinet rear surface, and a fastening screw extending through the camera bracket and the cabinet rear surface of the cabinet and fastened to the display module.

The display device may further include a rear cover covering the rear surface of the display module and the cabinet rear surface of the cabinet, and the rear cover may include a rear fastening hook extending through the camera bracket and fastened to the cabinet rear surface.

A portion of the rear cover corresponding to the rear portion of the camera body may be omitted, and a rear surface of the rear portion may form a continuous surface with a rear surface of the rear cover.

The display device may further include a front cover coupled to a front surface of the camera body, wherein the front cover covers the camera board and forms the front surface of the camera body, and the front cover may include a transparent portion at a location corresponding to the camera element.

The display device may further include a controller for performing adjustment of a posture of the display module using an image signal received from the camera module.

The controller may receive the image signal using one of a universal serial bus (USB) interface scheme and a mobile industry processor interface (MIPI) interface scheme and use the image signal in performing the posture adjustment of the display device.

The image signal obtained from the camera module may have a first image format, and the controller may convert the first image format of the image signal into a second image format, and control the image signal of the second image format to be used in performing the posture adjustment.

The display device may further include an external device interface unit for providing the image signal of the first image format to an external device.

The controller may further include a multimedia controller for changing the format of the image signal.

The display device may further include an image signal switch for selectively providing the image signal of the first image format to one of the multimedia controller and the external device interface unit.

The image signal switch may be switched such that the image signal is be provided to the multimedia controller while performing the posture adjustment, and the image signal switch may be switched such that the image signal is provided to the external device interface unit while not performing the posture adjustment.

The display device may further include a codec module for converting a format of an audio signal obtained from the camera module, and the audio signal whose format has been converted by the codec module may be transmitted to the external device interface unit.

The controller may further include a posture adjustment controller, and the multimedia controller may provide the image signal of the first image format to the external device interface unit, and control the image signal of the second image format to be provided to the posture adjustment controller.

The display device may further include a codec module for converting a format of an audio signal obtained from the camera module, and the audio signal whose format has been converted by the codec module may be transmitted to the external device interface unit via the multimedia controller.

The controller may control the image signal of the second image format to be displayed on the display module while performing the posture adjustment.

The display device may further include a posture adjustment driver for adjusting the posture of the display module, and the controller may control the posture adjustment driver such that the posture of the display module matches a posture of a user inferred by an artificial intelligence model from the image signal of the second image format.

### [Advantageous Effects]

The upper bezel may be minimized, allowing the camera to be mounted on the display device with the limited camera installation space.

The camera may be added while minimizing the impact on the outer appearance of the display via the camera of the slim design.

The camera fastening portion may be hidden by the rear cover and the connection cable, which transmits the information collected from the camera, may not be exposed to the outside, thereby providing the clean outer appearance.

In addition, when the camera is not in use, the security cover that covers the camera may be fastened to prevent the problems such as the invasion of the privacy resulted from the hacking.

The posture of the display unit may be automatically adjusted based on the posture of the user.

Effects that may be obtained from the present disclosure are not limited to the effects mentioned above, and other effects not mentioned will be clearly understandable to those skilled in the art in the technical field to which the present disclosure belongs from the description below.

### [Brief Description of the Drawings]

FIG. 1 is a block diagram for illustrating respective components of a display device according to the present disclosure.
FIG. 2 is a perspective view showing an example of a display device according to the present disclosure.
FIGS. 3 and 4 are perspective views showing an embodiment of a camera module of a display device according to the present disclosure.
FIG. 5 is a cross-sectional view taken along a line A-A in FIG. 3.
FIG. 6 is a cross-sectional view taken along a line B-B in FIG. 3.
FIGS. 7 to 9 are diagrams showing a method for fastening a camera module in FIG. 3.
FIG. 10 is a perspective view showing another embodiment of a camera module of a display device according to the present disclosure.
FIG. 11 is a cross-sectional view taken along a line E-E in FIG. 10.
FIG. 12 shows a block diagram for illustrating an operation of a display device according to an embodiment of the present disclosure.
FIG. 13 shows a block diagram according to an embodiment of the present disclosure for multimedia signal processing to perform an operation of a display device in FIG. 12.
FIG. 14 is a detailed block diagram on transmission of an image signal and an audio signal in FIG. 13.
FIG. 15 shows a block diagram according to an embodiment of the present disclosure for multimedia signal processing to perform an operation of a display device in FIG. 12.
FIGS. 16 and 17 are detailed block diagrams on transmission of an image signal and an audio signal in FIG. 15.
FIG. 18 shows a data transmission architecture of an image signal and an audio signal according to an embodiment of the present disclosure.
FIG. 19 shows a conversion block diagram of an image signal and an audio signal according to an embodiment of the present disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another..

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Meanwhile, an image display device 100 described in this specification is, for example, an intelligent image display device 100 having a computer supporting function in addition to a broadcast reception function, wherein an Internet function may be added while the broadcast reception function is devotedly performed, whereby an interface that is more conveniently used, such as a handwriting type input device, a touchscreen, or a space remote control, may be provided. In addition, the image display device may be connected to the Internet or a computer through support of a wired or wireless Internet function, whereby various functions, such as e-mail, web browsing, banking, or gaming, may be executed. For such various functions, a standardized general-purpose OS may be used.

In the image display device described in the present disclosure, therefore, various applications may be freely added or deleted, for example, on a general-purpose OS kernel, whereby various user friendly functions may be executed. More specifically, the image display device may be a network TV, an Hbb TV, or a smart TV, and is applicable to a smartphone depending on circumstances.

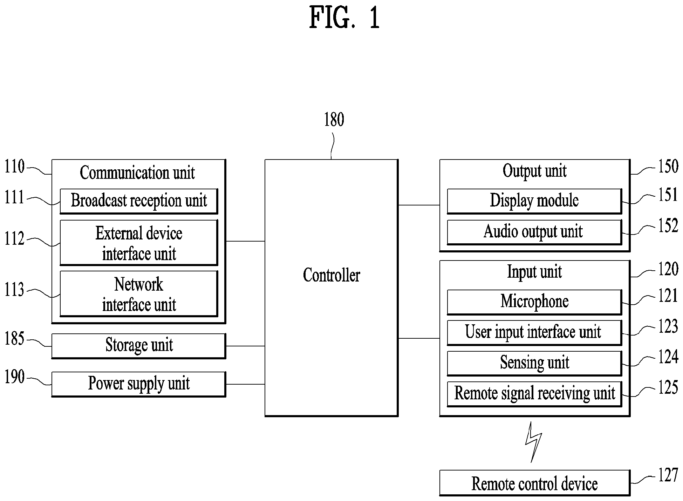

FIG. 1 is a block diagram illustrating components of a display device 100.

The display device 100 may include a communication unit 110, an input unit 120, a sensing unit 124, an output unit 150, a controller 180, a storage unit 185, and a power supply unit 190. The configuration shown in FIG. 1 may include only some of the components, and one configuration may perform two functions.

The communication unit 110 may include a broadcast reception unit 111 including a tuner unit and a demodulator. The tuner unit of the broadcast reception unit 111 may select a broadcast signal corresponding to a channel selected by a user or any one of all pre-stored channels, among broadcast signals received through an antenna (not shown) or a cable (not shown). The tuner unit 111 may convert the selected broadcast signal into an intermediate frequency signal or a baseband video or audio signal.

Meanwhile, the tuner unit may sequentially select broadcast signals of all broadcast channels stored through a channel memory function, among received broadcast signals, and may convert each of the selected broadcast signals into an intermediate frequency signal or a baseband video or audio signal

The demodulation unit of the broadcast reception unit 111 may receive the digital IF (DIF) signal converted by the tuner unit, and may perform demodulation. After performing demodulation and channel decryption, the demodulation unit may output a stream signal (TS). At this time, the stream signal may be a multiplexed image, audio, or data signal.

The stream signal output from the demodulation unit may be input to the controller 180. After performing demultiplexing and image/audio signal processing, the controller 180 may output an image through the display module 151, and may output audio through the audio output unit 152.

An external device interface unit 112 may connect an external device to the display device 100 to receive an image signal, an audio signal, and a control signal from the external device. The interface unit 112 may be connected by wire/wireless to external devices such as a Digital Versatile Disk (DVD), a Blu-ray, a game device, a camera, a camcorder, a computer (laptop), and the like.

The external device interface unit 112 transmits video, audio, or data signals inputted externally to the controller 180 of the display device 100 through the connected external device. In addition, the video, audio, or data signals processed by the controller 180 may be outputted to the connected external device.

The external device interface unit 112 may include a wired type and a wireless type. The wired type includes a physical terminal provided to the display device 100, and the wireless type may be connected to an external device through an antenna that receives a wireless signal.

The wired type may include a USB terminal, a Composite Video Banking Sync (CVBS) terminal, a component terminal, an S-video terminal (analog), a Digital Visual Interface (DVI) terminal, a High Definition Multimedia Interface (HDMI) terminal, an RGB terminal, a D-SUB terminal, and so on.

The wireless type may perform short-range wireless communication with other electronic devices located nearby. The display device 100 may be connected to other electronic devices via networks according to communication standards such as Bluetooth, Radio Frequency Identification (RFID), Infrared Data Association (IrDA), Ultra Wideband (UWB), ZigBee, Digital Living Network Alliance (DLNA), etc.

The network interface unit 113 may access a prescribed web page through a connected network or another network linked to the connected network. That is, the network interface unit 113 may transmit and receive data with a corresponding server by accessing the prescribed web page through the network. In addition, the network interface unit 113 may receive contents or data provided by a content provider or a network operator.

That is, contents such as movies, advertisements, games, VODs, and broadcast signals provided from content providers or network providers and information related to such contents may be received through the network. In addition, update information and update files of firmware provided by the network operator may be received. In addition, data may be transmitted to the Internet or content provider or network operator.

In addition, the network interface unit 113 may select a desired application from applications opened to the public and receive the selected application through the network.

According to an embodiment, when a game application is executed in the display device, the network interface unit 113 may transmit or receive prescribed data to or from a user terminal connected to the display device via the network. Also, prescribed data may be transmitted or received with a server that stores game scores.

The input unit 120 may include a microphone 121 that collects sound, a user input unit 123 that detects a user's command, a sensor unit that senses a state and surrounding state of the display device, and a remote signal reception unit 125 that receives a signal of a remote controller 127.

The microphone 121 may recognize a user's voice or surrounding sound, and in particular, receive a user's voice and process it as electrical audio data. Various noise cancellation algorithms for removing noise generated in the process of receiving an external audio signal may be implemented in the microphone 121.

The microphone 121 may simply collect user's voice, convert the collected voice into audio data, and store it in the storage unit 185 or transmit it to the external device via the communication unit110, and may also perform a function as the user input unit 123 in a manner of analyzing the audio data and recognizing it as a user command.

In addition to the main body of the display device 100, the microphone 121 may be mounted on the remote controller 127, which will be described later, and the corresponding audio data may be forwarded to the controller 180 through the remote signal reception unit 125.

The user input unit 123 is a device to which a user inputs a control command for controlling the display device. The user input unit 123 may include a keypad, a button, a touch pad, a touch screen, etc.

When the user input unit 123 includes a hard key button, a user may input a command related to the display device 100 through a push operation of the hard key button. When the user input unit 123 is provided with a touchscreen, the user may input a command related to display device 100 to remote controller 127 by touching the soft key of the touchscreen.

In addition, the user input unit 123 may include various types of input means that the user can operate, such as a scroll key, a jog key, etc., and the present embodiment does not limit the scope of the right of the present disclosure.

Recently, as the size of a bezel of the display device 100 decreases, the display device 100 tends to minimize the user input unit 123 of the physical button type exposed externally. Instead, a minimum physical button is located on a rear side or a lateral side, and a user input may be received from a touchpad or the remote controller 127 through a remote signal reception unit 125 that will be described later.

The remote signal reception unit 125 may input a command related to the display device 100 through the remote controller 127 having the user input unit 123. The remote signal reception unit 125 is a sort of the user input unit 123 and may belong to a wireless communication unit because it receives signals from the remote controller 127 according to various communication methods such as Radio Frequency (RF) communication method, Infrared (IR) communication method, etc.

The sensing unit 124 refers to a device that detects a change in the display device 100 or an external change. For example, the sensing unit 124 may include at least one of a proximity sensor, an illumination sensor, a touch sensor, an Infrared (IR) sensor, an ultrasonic sensor, an optical sensor (e.g., a camera), a voice sensor (e.g., a microphone), a battery gauge, an environment sensor (e.g., a hygrometer, a thermometer, etc.), and the like.

Recently, a display device 100 that can move or change a direction of a display has emerged, and a gyro sensor, an acceleration sensor and the like may be provided to detect a posture of the display device.

Based on the information collected by the sensing unit 124, the controller 180 may check the state of the display device 100 and notify a user of a problem when the problem occurs or adjust it by itself, thereby controlling the display device 100 to maintain a best state.

In addition, the content, image quality, and size of an image provided to the display module 151 may be controlled differently depending on a viewer, a surrounding illumination and the like sensed by the sensing unit 124, thereby providing an optimal viewing environment. As smart TVs advance, functions mounted on the display device increase, and the sensing unit 124 is also increasing correspondingly.

The output unit 150 is a device that provides visual and auditory information to a user through the display device, and may include the display module 151 and the audio output unit 152.

The display module 151 may convert an image signal, a data signal, an OSD signal, and a control signal processed by the controller 180 or an image signal, a data signal, and a control signal received from the interface unit to generate a driving signal. The display module 151 may include a display panel having a plurality of pixels.

Each of the plurality of pixels in the display panel may include RGB subpixels. Alternatively, each of the plurality of pixels in the display panel may include RGBW subpixels. The display module 151 may convert an image signal, a data signal, an OSD signal, and a control signal processed by the controller 180 to generate a driving signal for the plurality of pixels.

A plasma display panel (PDP), a liquid crystal display (LCD), an organic light-emitting diode (OLED), or a flexible display may be used as the display module 151, and a 3D display may also be used. The 3D display 130 may be classified as a non-glasses type display or a glasses type display.

The display device 100 includes a display module 151, which occupies a major portion of the front surface thereof, and a case configured to cover the rear surface and the side surface of the display module 151, the case being configured to package the display module 151.

In recent years, the display device 100 has used a flexible display module 150, such as light-emitting diodes (LED) or organic light-emitting diodes (OLED), in order to implement a curved screen.

Light is supplied to an LCD, which was mainly used conventionally, through a backlight unit, since the LCD is not self-emissive. The backlight unit is a device that supplies light emitted from a light source to a liquid crystal uniformly located in front thereof. As the backlight unit has been gradually thinned, a thin LCD has been implemented. However, it is difficult to implement the backlight unit using a flexible material. If the backlight unit is curved, it is difficult to supply uniform light to the liquid crystal, whereby the brightness of a screen is changed.

In contrast, the LED or the OLED may be implemented so as to be curved, since an element constituting each pixel is self-emissive, and therefore no backlight unit is used. In addition, since each element is self-emissive, the brightness of the element is not affected even though the positional relationship between adjacent elements is changed, and therefore it is possible to implement a curved display module 150 using the LED or the OLED.

An organic light-emitting diode (OLED) panel appeared in earnest in mid 2010 and has rapidly replaced the LCD in the small- or medium-sized display market. The OLED is a display manufactured using a self-emissive phenomenon of an organic compound in which the organic compound emits light when current flows in the organic compound. The response time of the OLED is shorter than the response time of the LCD, and therefore afterimages hardly appear when video is implemented.

The OLED is an emissive display product that uses three fluorescent organic compounds having a self-emissive function, such as red, green, and blue fluorescent organic compounds and that uses a phenomenon in which electrons injected at a negative electrode and a positive electrode and particles having positive charges are combined in the organic compounds to emit light, and therefore a backlight unit, which deteriorates color, is not needed.

A light-emitting diode (LED) panel is based on technology of using one LED element as one pixel. Since it is possible to reduce the size of the LED element, compared to a conventional device, it is possible to implement a curved display module 150. The conventional device, which is called an LED TV, uses the LED as a light source of a backlight unit that supplies light to the LCD, and therefore the LED does not constitute a screen.

The display module includes a display panel and a coupling magnet, a first power supply unit, and a first signal module located at a rear surface of the display panel. The display panel may include a plurality of pixels R, G, and B. The plurality of pixels R, G, and B may be formed at intersections between a plurality of data lines and a plurality of gate lines. The plurality of pixels R, G, and B may be disposed or arranged in a matrix form.

For example, the plurality of pixels R, G, and B may include a red subpixel 'R', a green subpixel 'G', and a blue subpixel 'B'. The plurality of pixels R, G, and B may include a white subpixel 'W'.

The side of the display module 150 on which a picture is displayed may be referred to as a front side or a front surface. When the display module 150 displays the picture, the side of the display module 150 from which the picture cannot be viewed may be referred to as a rear side or a rear surface. Meanwhile, the display module 150 may be constituted by a touchscreen, whereby an input device may also be used in addition to an output device.

The audio output unit 152 receives an audio signal processed by the controller 180 and outputs the same as audio.

The controller 180 may include at least one processor, and may control the overall operation of the display device 100 using the processor included therein. Here, the processor may be a general processor, such as a central processing unit (CPU). Of course, the processor may be a dedicated device, such as an ASIC, or another hardware-based processor.

The controller 180 may demultiplex a stream input through the tuner unit, the demodulation unit the external device interface unit 112, or the network interface unit 113, or may process demultiplexed signals to generate and output a signal for image or audio output.

An image signal processed by the controller 180 may be input to the display module 151, which may display an image corresponding to the image signal. In addition, the image signal processed by the controller 180 may be input to an external output device through the external device interface unit 112.

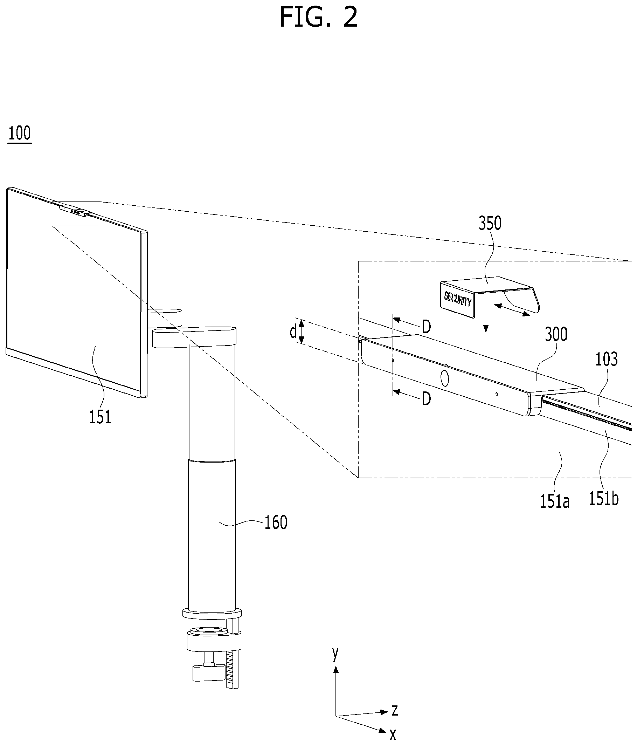

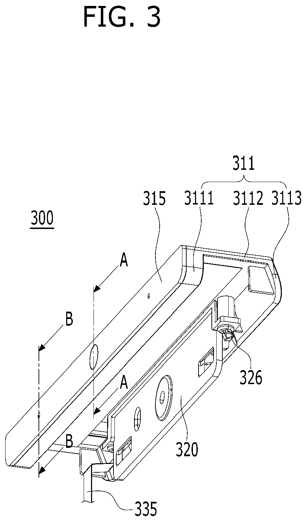

An audio signal processed by the controller 180 may be output through the audio output unit 152. In addition, the audio signal processed by the controller 180 may be input to an external output device through the external device interface unit 112. Although not shown in FIG. 2, the controller 180 may include a demultiplexing unit and an image processing unit. This will be explained later, referring to fig. 3.

Further, the controller 180 may control the overall operation of the display device 100. For example, the controller 180 may control the tuner unit such that a broadcast corresponding to a channel selected by a user or a pre-stored channel is tuned.

In addition, the controller 180 may control the display device 100 according to a user command input through the user input interface unit or an internal program. Meanwhile, the controller 180 may control the display module 151 to display an image. At this time, the image displayed on the display module 151 may be a still image or video, or may be a 2D image or a 3D image.

Meanwhile, the controller 180 may perform control such that a predetermined 2D object is displayed in an image displayed on the display module 151. For example, the object may be at least one of a connected web screen (newspaper or magazine), an electronic program guide (EPG), various menus, a widget, an icon, a still image, video, and text.

Meanwhile, the controller 180 may modulate and/or demodulate a signal using an amplitude shift keying (ASK) method. Here, the amplitude shift keying (ASK) method may be a method of changing the amplitude of a carrier depending on a data value to modulate a signal or restoring an analog signal to a digital data value depending on the amplitude of a carrier.

For example, the controller 180 may modulate an image signal using the amplitude shift keying (ASK) method, and may transmit the modulated image signal through a wireless communication module.

For example, the controller 180 may demodulate and process an image signal received through the wireless communication module using the amplitude shift keying (ASK) method.

As a result, the display device 100 may easily transmit and receive a signal to and from another image display device disposed adjacent thereto without using a unique identifier, such as a media access control (MAC) address, or a complicated communication protocol, such as TCP/IP.

Meanwhile, the display device 100 may further include a photographing unit (not shown). The photographing unit may photograph a user. The photographing unit may be implemented by one camera; however, the present disclosure is not limited thereto. The photographing unit may be implemented by a plurality of cameras. Meanwhile, the photographing unit may be embedded in the display device 100 above the display module 151, or may be separately disposed. Image information photographed by the photographing unit may be input to the controller 180.

The controller 180 may recognize the location of a user based on an image captured by the photographing unit. For example, the controller 180 may recognize the distance between the user and the display device 100 (z-axis coordinate). Further, the controller 180 may recognize an x-axis coordinate and a y-axis coordinate in the display module 151 corresponding to the location of the user.

The controller 180 may sense user gesture based on the image captured by the photographing unit, a signal sensed by the sensor unit, or a combination thereof.

The storage unit 185 may store programs for signal processing and control in the controller 180, and may store a processed image, audio, or data signal. For example, the storage unit 185 may store application programs designed to execute various tasks that can be processed by the controller 180, and may selectively provide some of the stored application programs in response to request of the controller 180.

Programs stored in the storage unit 185 are not particularly restricted as long as the programs can be executed by the controller 180. The storage unit 185 may temporarily store an image, audio, or data signal received from an external device through the external device interface unit 171. The storage unit 185 may store information about a predetermined broadcast channel through a channel memory function, such as a channel map.

FIG. 1 shows an embodiment in which the storage unit 185 and the controller 180 are separately provided; however, the present disclosure is not limited thereto. The storage unit 185 may be included in the controller 180.

The storage unit 185 may include at least one of a volatile memory (e.g. DRAM, SRAM, or SDRAM), a nonvolatile memory (e.g. flash memory), a hard disk drive (HDD), and a solid-state drive (SSD).

The power supply unit 190 may supply power to the components of the display device 100. In particular, the power supply unit may supply power to the controller 180, which may be implemented in the form of a system on chip (SOC), the display module 150 for image display, and the audio output unit 160 for audio output.

Specifically, the power supply unit 190 may include an AC/DC converter (not shown) configured to convert AC power into DC power and a DC/DC converter (not shown) configured to convert the level of the DC power.

Meanwhile, the power supply unit 190 serves to distribute power supplied from the outside to the respective components of the display device. The power supply unit 190 may be directly connected to an external power supply in order to supply AC power, or may include a battery so as to be used by charging.

In the former case, a cable is used, and the power supply unit is difficult to move or the movement range of the power supply unit is limited. In the latter case, the power supply unit is free to move, but the weight of the power supply unit is increased in proportion to the weight of the battery, the volume of the power supply unit is increased, and, for charging, the power supply unit must be directly connected to a power cable or must be coupled to a charging holder (not shown) that supplies power for a predetermined time.

The charging holder may be connected to the display device through a terminal exposed to the outside, or the battery mounted in the power supply unit may be charged in a wireless manner when the power supply unit approaches the charging holder.

Meanwhile, the block diagram of the display device 100 shown in FIG. 1 is for an embodiment of the present disclosure, and elements of the block diagram may be integrated, added, or omitted depending on specifications of an actually implemented display device 100.

That is, two or more elements may be integrated into one element, or one element may be divided into two or more elements, as needed. In addition, the function performed by each block is for describing the embodiment of the present disclosure, and the specific operations and components thereof do not limit the scope of rights of the present disclosure.

FIG. 2 is a front perspective view showing an example of the display device 100.

Referring to FIG. 2, the display device 100 may have a rectangular main body including a pair of long sides and a pair of short sides.

The long side extending in a horizontal direction and the short side extending in a vertical direction are shown in the drawing, but the long side and the short side may be the same length and the long side may be disposed in the vertical direction.

For convenience of description, the description will be based on an embodiment in which a side extending in the horizontal direction (an x-axis direction) is the long side and a side extending in the vertical direction (a y-axis direction) is the short side, but the present disclosure is not limited thereto as described above.

A side on which the display device 100 displays an image may be referred to as a front side or a front surface. When the display device 100 displays the image, a side from which the image is not able to be observed may be referred to as a rear side or a rear surface.

Recently, as a thickness of the display device 100 has become smaller and a backlight structure has been omitted, the display module 151 may maintain a flat state without being bent, via an inner plate 104 that supports the rear surface.

The display module 151 includes an output unit where an image is output and a bezel around a perimeter where the image is not output. The recent display module 151 has a minimal bezel, existing almost in a strip shape around the perimeter, and has a slightly larger bezel only at the bottom where a panel board connected to a main board is located.

Therefore, instead of a front casing that covers the front surface of the display module 151, a frame-shaped cabinet 103 extending along perimeters of side surfaces of the display module 151 may be used, and a cabinet front surface that is located at the front may be omitted from the cabinet 103 except for a lower end of the display module 151.

The main board that controls the display device 100 may be located on a rear surface of the inner plate, and a rear cover 102 that covers the same may be included.

The display device 100 may include a stand 160 for mounting the same. A shape of the stand 160 may vary depending on a size and a purpose of the display device 100. The stand 160 in the present embodiment is shown in a shape including a clamp that may be fixed to a desk or the like and a frame that may adjust a vertical level, but the present disclosure is not limited thereto.

The display device 100 in the present disclosure may be equipped with a camera module 300 for two-way communication as well as for outputting the image. The camera module 300 may correspond to the capturing unit described above. Because the typical display device 100 only performs output without receiving input, a separate camera device in a shape of being fixed to the upper bezel is used. The camera module 300 may be used, for example, to capture a user positioned in front of the display device 100.

However, recently, the bezel of the display device 100 has become smaller and thinner, making it difficult to fix the camera device at the top of the display device 100. In addition, a cable 335 and a power cable 335 are additionally required for connection of the camera device and a main device such as a computer, so that there is a problem in that the cables 335 are complicatedly disposed around the display device 100.

Recently, with activation of the two-way communication, a frequency of use of the camera is increasing, so that the present disclosure provides the display device 100 equipped with the camera module 300.

Referring to an enlarged portion of the camera module 300 in FIG. 2, the camera module 300 located on top of the display module 151 is shown. The camera module 300 of the display device 100 according to the present disclosure may have a vertical dimension corresponding to a thickness d of the cabinet 103 and the bezel on top of the display module 151.

The camera module 300 may include a camera element 333 located at a front side, and when the camera module 300 is not used, a security cover 350 that covers the camera element 333 may be used to prevent privacy exposure resulted from hacking.

The security cover 350 has a shape corresponding to a shape of a top surface of the camera module 300 and is bent into a ' 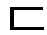 '-shape. Considering an inclination of the rear cover 102, a rear surface of the security cover 350 may be inclined rather than perpendicular to the top surface and may have a shape inclined downward.

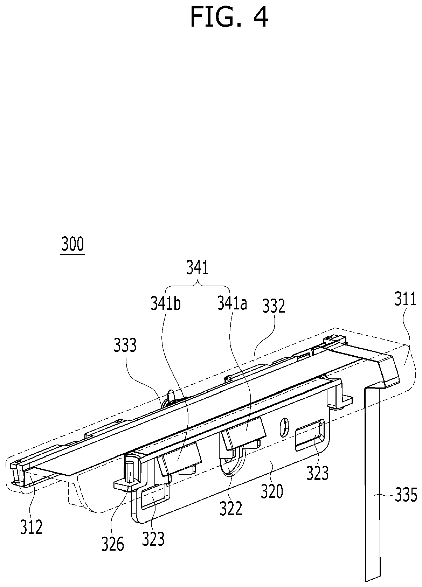

FIGS. 3 and 4 are perspective views showing an embodiment of the camera module 300 of the display device 100 according to the present disclosure. FIG. 3 is a view viewed from a front lower side, and FIG. 4 is a view viewed from a rear side.

The camera module 300 includes a camera body 311 located at an upper side of the display device 100 while surrounding an upper portion of the cabinet 103. The camera body 311 may be composed of a front portion 3111 located at an upper end of the front surface of the display module 151, an upper portion 3112 located on top of the cabinet 103, and a rear portion 3113 extending from the upper portion 3112 in a rearward direction to be located in a direction of the rear surface of the display module 151.

The rear portion 3113 may protrude in the rearward direction from the upper portion 3112 and extend downward to have a shape corresponding to an inclined surface of the rear cover 102 so as to form a continuous surface with the rear cover 102 coupled to the rear surface of the display module 151.

In the front portion 3111, a camera board 331 on which the camera element 333 is mounted may be located, and an infrared sensor, a proximity sensor, an illumination sensor, a microphone 332, and the like other than the camera may be located. A front cover 315 coupled to the front surface to cover the board located in the front portion 3111 may be included. A user's voice and/or a surrounding sound located in front of the display device 100 may be picked up via the microphone 332.

Because the camera element 333 and the sensors should transmit light, the front cover 315 may use a transparent material for a portion 3155 where the camera element 333 and the sensors are located and may use an opaque or translucent material for the remaining portion to cover internal components.

The camera body 311 may be made of an injection-molded product, and a camera bracket 320 made of a separate rigid material may be coupled thereto to be coupled to the main body of the display device 100. The camera bracket 320 may be made of an injection-molded product like the camera body 311, but it is advantageous to use a metal material because a thickness increases to ensure rigidity in the case of the injection-molded product.

The bracket 320 may have a plate shape in consideration of ease of manufacture and may have a plurality of fastening holes for the coupling. The fastening holes may be composed of a first fastening hole 322 through which a screw 325 passes and a second fastening hole 323 into which a fastening structure of the rear cover 102 is inserted.

An upper side of the camera bracket 320 may be fastened to the camera body 311 via a screw 326, and both sides of the camera bracket 320 may be fastened with the screws 326. The camera bracket 320 may be fastened to the inner plate 104 of the display module 151 and may be located between the inner plate and the rear cover 102.

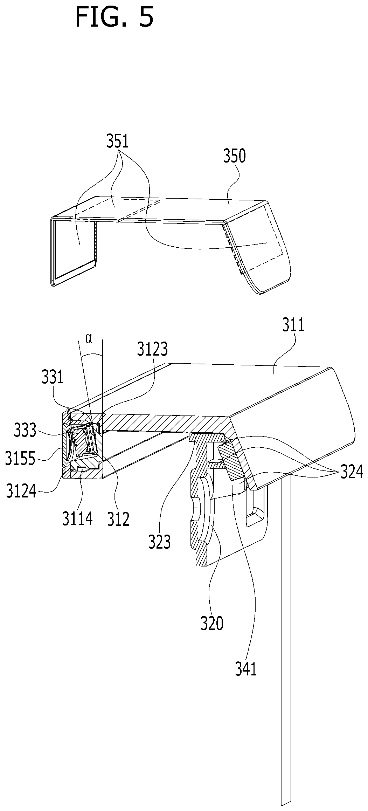

FIG. 5 is a cross-sectional view taken along a line A-A in FIG. 3. The camera body 311 in the present embodiment may further include an inner body 312 on which the camera board 331 is seated. After the camera board 331 is seated on the inner body 312, the camera board 331 may be coupled to the front portion 3111 of the camera body 311. The inner body 312 may have hook structures 3114 and 3124 for fastening to the camera body 311.

The camera module 300 in the present disclosure is located on top of the display module 151, so that the camera module 300 is located above a user's face. In particular, when the display moves in a vertical direction, the camera module 300 is located above the user's face.

A board seating surface 3123 on which the camera board 331 is seated may be constructed as a downwardly inclined surface such that the camera element 333 faces slightly downward. The inner body 312 in the present embodiment may have the board seating surface 3123 inclined downward by a. The camera board 331 and the camera element 333 may be disposed at an angle to face a front lower side of the display device 100.

The security cover 350 may have a shape that corresponds to a shape of the camera body 311, and may be constructed to easily slide in the horizontal direction by attaching a low-friction tape 351 to an inner surface thereof to facilitate a horizontal movement.

The rear portion 3113 of the camera body 311 may include a magnet 341. The magnet 341 fixes the security cover 350, which is seated on top of the camera body 311. A magnetic rib 324 for supporting the magnet 341 may protrude from the camera bracket 320.

The security cover 350 may include a ferromagnetic body attached to the magnet 341. The security cover 350 itself may be made of metal, which is the ferromagnetic body attached to the magnet 341.

As shown in FIG. 4, the magnet 341 may include a pair of magnets, and may include a first magnet 341a attached to the security cover 350 when the security cover 350 is disposed at a location to cover the camera element 333, and a second magnet 341b attached to the security cover 350 when the security cover 350 is disposed at a location to expose the camera element 333.

While preventing the security cover 350 from being deviated from the camera module 300 by fixing the location of the security cover 350 with the magnet 341, the low-friction tape 351 may be used to easily slide the security cover 350 without a complicated structure.

Additionally, because there is no physical fastening structure between the camera body 311 and the security cover 350, the user may remove the security cover 350 from the camera body 311.

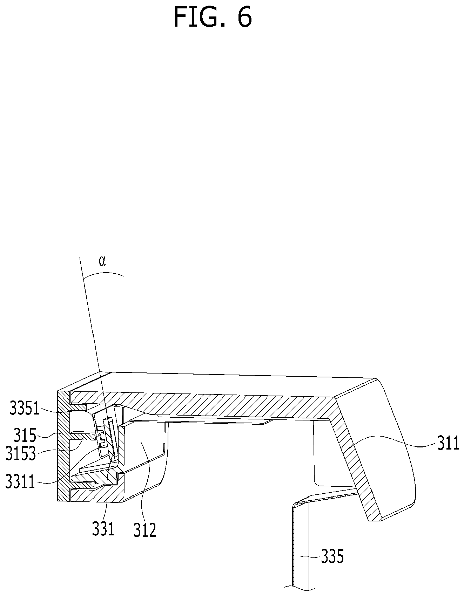

FIG. 6 is a cross-sectional view taken along a line B-B in FIG. 3. The camera board 331 requires the connection cable 335 to transmit information obtained from the camera to the main board (not shown) located on the rear surface of the display module 151. One end of the connection cable 335 may be connected to the camera board 331, and the other end thereof may extend along an inner surface of the camera body 311 and then be connected to the main board on the rear surface of the display module 151.

One side of the camera board 331 may have a second connector 3311 connected to a first connector 3351 of the connection cable 335, and the front cover 315 may include a connector fixing rib 3153 protruding toward the connector to prevent the connectors 3311 and 3351 from being separated from each other and fix the location of the camera board 331.

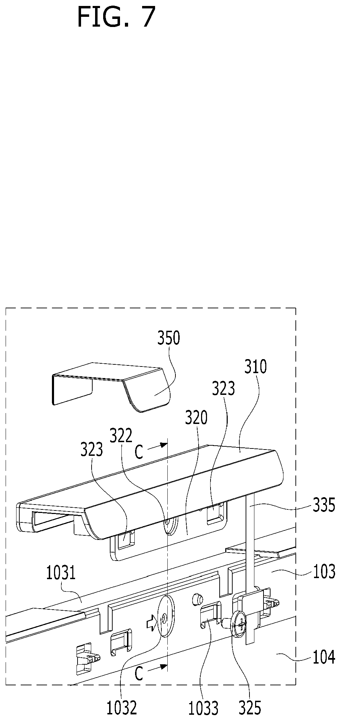

FIGS. 7 to 9 are diagrams showing a method for fastening the camera module 300 in FIG. 3. FIG. 7 shows a location where the camera module 300 in FIG. 3 is fastened on top of the display module 151.

The cabinet 103 may be composed of cabinet side surfaces located around the display module 151 and a cabinet rear surface located in the direction of the rear surface of the display module 151 and forming a right angle with the cabinet side surface.

A camera seating portion 1031 may be formed on a cabinet side surface on top of the display module 151 such that the camera module 300 is seated thereon. The camera seating portion 1031 is slightly retracted, so that the camera module 300 does not protrude too much from the upper side of the display device 100 and is naturally connected to the bezel.

The cabinet rear surface may include a third fastening hole 1032 and a fourth fastening hole 1033 corresponding to the first fastening hole 322 and the second fastening hole 323 defined in the camera bracket 320. The camera module 300 is seated on the camera seating portion 1031 such that the first fastening hole 322 overlaps the third fastening hole 1032 and the second fastening hole 323 overlaps the fourth fastening hole 1033.

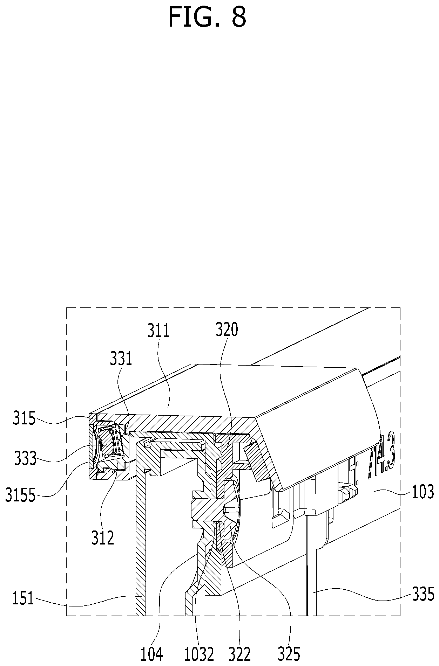

FIG. 8 is a diagram showing a method for fastening the camera module 300 to the display module 151 and the cabinet 103 in the state in FIG. 7. This is a cross-section at a location corresponding to C-C in FIG. 7. As shown in FIG. 8, the camera module 300 may be fixed by fastening the fastening screw 325 to the inner plate through the first fastening hole and the second fastening hole 323.

In this regard, when fixing the camera module 300 using the fastening screw 325 to originally fix the cabinet 103 to the inner plate, a plurality of members (the cabinet 103 and the camera module 300) may be coupled with the inner plate of display module 151 with minimum fasteners without a need to add additional fasteners.

The connection cable 335 extends downward toward the main board located on a lower portion of the rear surface of the inner plate.

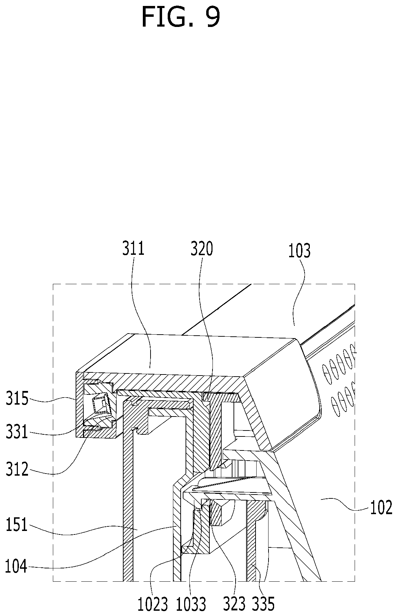

FIG. 9 is a diagram showing a method for fastening a rear cover in the state in FIG. 8, and is a cross-sectional view taken along a line D-D in FIG. 2. A rear fastening hook 1023 that couples a rear casing and protrudes from the rear casing may be fastened through the second fastening hole 323 of the camera bracket 320 and the fourth fastening hole 1033 of the cabinet 103. The cabinet 103, the camera module 300, and the rear cover 102 may be fastened together via one rear fastening hook 1023.

The rear cover 102 may be constructed to have a continuous surface by setting the rear portion 3113 of the camera body 311 and a rear surface of the rear cover 102 to have the same inclination while omitting a location corresponding to the rear portion 3113 of the camera body 311.

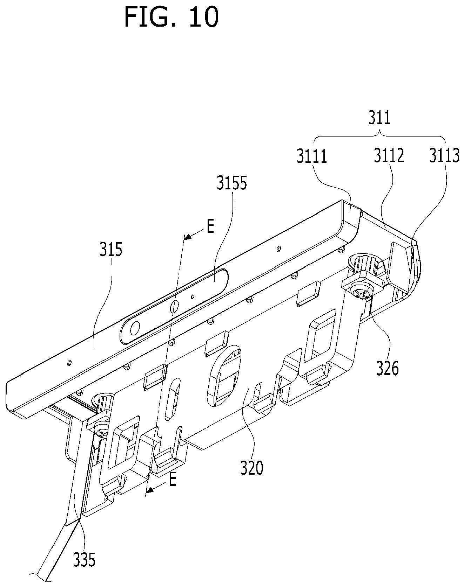

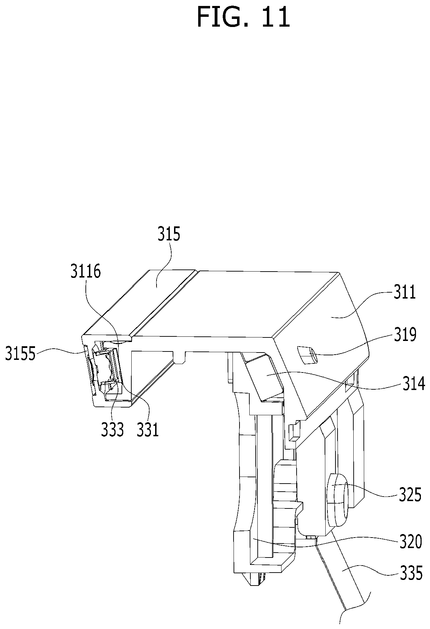

FIG. 10 is a perspective view showing another embodiment of the camera module 300 of the display device 100 according to the present disclosure, and FIG. 11 is a cross-sectional view taken along a line E-E in FIG. 10.

The camera module 300 in the present embodiment may be different from the above-described embodiment in the front cover 315, and may directly have a board seating surface 3116 at the front portion 3111 of the camera body 311 without the inner body 312.

In the above-described embodiment, as shown in FIGS. 5 and 6, the front cover 315 may have a shape of being fitted inside the camera body 311, and a lower portion thereof may be fitted between an inner cover and the camera body 311.

The front cover 315 in the present embodiment may have a shape that surrounds upper and lower portions of the camera body 311, and may have a hook-shaped fastening portion (not shown) to fasten an inner surface of the front cover 315 and the upper portion 3112 of the camera body 311 to each other.

To limit a movable range of the security cover 350, a stop protrusion 319 may be formed on the rear portion 3113 other than the magnet 341 to prevent the rear cover from moving laterally and deviating from the camera module 300.

As described above, the upper bezel may be minimized, allowing the camera to be mounted on the display device 100 with a limited camera installation space.

The camera may be added while minimizing an impact on an outer appearance of the display via the camera of a slim design.

The camera fastening portion may be hidden by the rear cover 102 and the connection cable 335, which transmits the information collected from the camera, may not be exposed to the outside, thereby providing a clean outer appearance.

In addition, when the camera is not in use, the security cover 350 that covers the camera may be fastened to prevent problems such as invasion of privacy resulted from hacking.

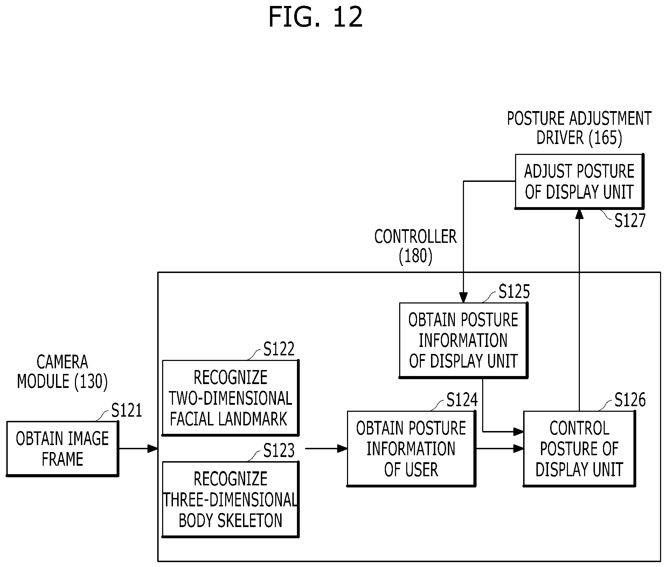

In one example, the stand 160 for mounting the display device 100 may include a posture adjustment driver 165 (in FIG. 12) for adjusting a posture of the display device 100 (or the display module 151). Hereinafter, the display device 100 or the display module 151 may be referred to as a display unit.

The posture adjustment driver 165 may include at least one of a tilting driver (not shown) for adjusting an inclination angle of the display unit, a vertical level adjuster (not shown) for adjusting a vertical level of the display unit, and a distance adjuster (not shown) for adjusting a distance between the display unit and the user.

The operation of the display device in a posture adjustment mode described above will be briefly described with further reference to FIG. 12. FIG. 12 shows a block diagram for illustrating an operation of a display device according to an embodiment of the present disclosure.

A camera module 130 may obtain an image frame (a still image or a moving image) of the user located in front of the display device 100 to use the display device 100 [S121].

The controller 180 may receive the image frame from the camera module 130, perform two-dimensional facial landmark recognition of the user from the image frame, and also perform three-dimensional body skeleton recognition of the user from the image frame [S122 and S123]. The controller 180 may utilize an artificial intelligence model to recognize the two-dimensional facial landmark and/or the three-dimensional body skeleton recognition of the user.

The controller 180 may obtain posture information of the user, based on results of the facial landmark recognition and the body skeleton recognition [S124]. That is, the controller 180 may sense a change in a posture of the user based on the facial landmark recognition and the body skeleton recognition. The controller 180 may utilize the artificial intelligence model in obtaining the posture information of the user based on the results of the facial landmark recognition and the body skeleton recognition.

The posture of the user may mean at least one of relative locations and directions of respective body parts of the user. The user posture may be a concept that further includes at least one of a relative location (e.g., a distance at which the user is spaced apart from the display unit 100, a vertical level of the user's face relative to the display unit 100, and the like) and a direction of the user with respect to the display unit 100.

The controller 180 may control the posture adjustment driver 165 based on the posture information of the user and the current posture information of the display unit 100 [S126].

That is, the posture adjustment driver 165 may adjust the posture of the display unit 100 to suit the user such that the posture of the display unit 100 matches the posture of the user, that is, the user may comfortably view the display unit 100 under control of the controller 180 [S127].

The posture of the display unit 100 may mean at least one of a tilting angle, a panning angle, the vertical level, and the distance of the display unit 100.

The controller 180 may obtain adjusted posture information of the display unit 100 [S125]. The controller 180 may obtain the adjusted posture information from the posture adjustment driver 165 or from control command information for controlling the posture adjustment driver 165.

As described above, the obtained posture information of the display unit 100 may be used in adjusting the posture of the display unit 100 together with the posture information of the user [S126].

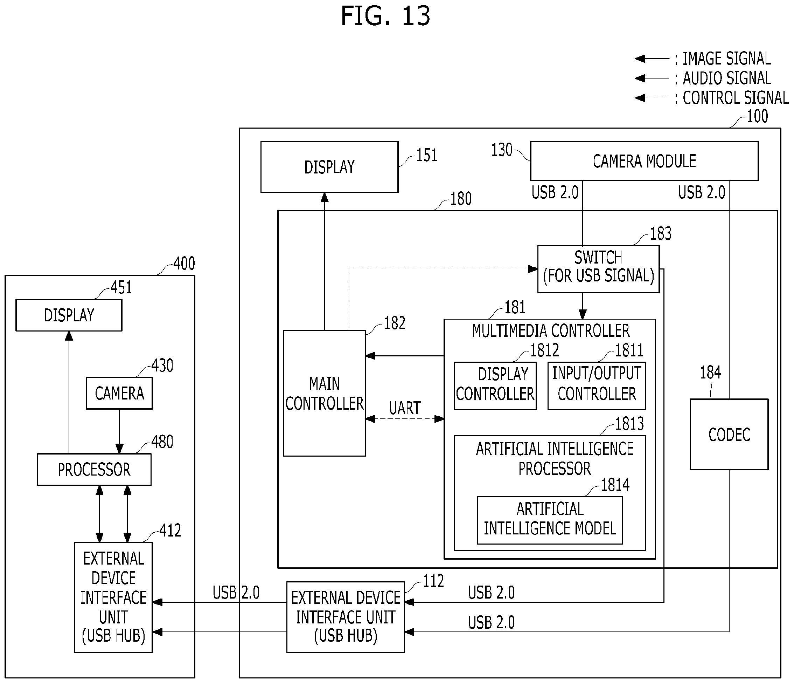

Hereinafter, with further reference to FIG. 13, processing of a multimedia signal (an image signal and/or an audio signal) obtained via the camera module 130 for the posture adjustment of the display unit 100 will be described. FIG. 13 shows a block diagram according to an embodiment of the present disclosure for multimedia signal processing to perform an operation of a display device in FIG. 12.

To use the display device 100, the camera module 130 may obtain an image signal regarding the image frame (the still image or the moving image) of the user located in front of the display device 100. A color space of the image signal may be one of RGB, YCbCr, YUV, HSV, and HIS. In this regard, the camera module 130 may obtain an audio signal regarding a user's voice and/or a surrounding sound thereof via the microphone disposed therein.

The image signal and the audio signal obtained from the camera module 130 may be transmitted to the controller 180. The image signal and the audio signal may be transmitted from the camera module 130 to the controller 180 via, for example, a universal serial bus (USB) interface scheme. In one example, the signals may be transmitted via another interface scheme (e.g., a mobile industry processor interface (MIPI)).

The controller 180 may include a multimedia controller 181, a main controller 182, an image signal switch 183, and a codec module 184.

The codec module 184 of the controller 180 may convert the received audio signal from an analog signal to a digital signal or from a first format digital signal to a second format digital signal. In FIG. 13, the codec module 184 is shown as being included in the controller 180, but the codec module 184 may be constructed as a separate module independent of the controller 180 or may be included in the camera module 130.

The digitally converted audio signal may be transmitted to another external device 400 (e.g., a personal computer such as a laptop or a desktop) via the external device interface unit 112. The external device interface unit 112 may be a USB hub.

The external device 400 may receive the audio signal via an own external device interface unit 412 and transmit the audio signal to an own external device processor 480.

In one example, the multimedia controller 181 within the controller 180 may receive the image signal via the image signal switch 183. In FIG. 13, the image signal switch 183 is shown as being included in the controller 180, but the image signal switch 183 may be constructed as a separate module independent of the controller 180.

The image signal switch 183 may be controlled by the main controller 182 of the controller 180 and switched to transmit the image signal obtained from the camera module 130 to one of the multimedia controller 181 and the external device interface unit 112.

For example, when the display device 100 is in the posture adjustment mode described in FIG. 12, the image signal switch 183 may be switched such that the image signal is transmitted to the multimedia controller 181, and when the display device 100 is not in the posture adjustment mode, the image signal switch 183 may be switched such that the image signal is transmitted to the external device interface unit 112.

The multimedia controller 181 is for processing (e.g., encoding and/or decoding) and artificial intelligence inference of the multimedia signal (i.e., the image signal and/or the audio signal). The multimedia controller 181 may include an input/output controller 1811, an image display controller 1812, and an artificial intelligence processor 1813.

When the display device 100 is in the posture adjustment mode, the input/output controller 1811 may control reception of the image signal.

The image display controller 1812 may control the image signal conversion for display of the received image signal. That is, the image display controller 1812 may convert the received image signal into, for example, a high definition multimedia interface (HDMI) image signal for the display of the received image signal. In one example, the received image signal may also be converted into an image signal of another interface scheme. The converted image signal may be transmitted directly from the image display controller 1812 to the main controller 182, or may be transmitted from the image display controller 1812 to the main controller 182 via the input/output controller 1811.

The artificial intelligence processor 1813 may receive the image signal as input data for inference and infer the two-dimensional facial landmark and/or the three-dimensional body skeleton of the user via an artificial intelligence model 1814.

Hereinafter, an artificial intelligence (AI) that may be utilized in the present disclosure will be described.

Artificial Intelligence (AI) refers to a field that studies artificial intelligence or methodology capable of achieving artificial intelligence. Machine learning refers to a field that defines various problems handled in the AI field and studies methodology for solving the problems. Machine learning may also be defined as an algorithm for raising performance for any task through steady experience of the task.

An artificial neural network (ANN) may refer to a model in general having problem solving capabilities, that is composed of artificial neurons (nodes) constituting a network by a combination of synapses, as a model used in machine learning. The ANN may be defined by a connection pattern between neurons of different layers, a learning process of updating model parameters, and/or an activation function for generating an output value.

The ANN may include an input layer, an output layer, and, optionally, one or more hidden layers. Each layer includes one or more neurons and the ANN may include a synapse connecting neurons. In the ANN, each neuron may output input signals, which are input through the synapse, weights, and function values of an activation function for deflection.

A model parameter refers to a parameter determined through learning and includes a weight of synaptic connection and a deflection of a neuron. A hyperparameter refers to a parameter that should be configured before learning in a machine learning algorithm and includes a learning rate, the number of repetitions, a mini batch size, an initialization function, and the like.

The purpose of learning of the ANN may be understood as determining the model parameter that minimizes a loss function. The loss function may be used as an index to determine an optimal model parameter in a learning process of the ANN.

Machine learning may be classified into supervised learning, unsupervised learning, and reinforcement learning, according to a learning scheme.

Supervised learning refers to a method of training the ANN in a state in which a label for training data is given. The label may represent a correct answer (or result value) that the ANN should infer when the training data is input to the ANN. Unsupervised learning may refer to a method of training the ANN in a state in which the label for the training data is not given. Reinforcement learning may refer to a learning method in which an agent defined in a certain environment is trained to select a behavior or a behavior order that maximizes accumulative compensation in each state.

Among ANNs, machine learning implemented as a deep neural network (DNN) including a plurality of hidden layers is also called deep learning. Deep learning is a part of machine learning. Hereinbelow, machine learning includes deep learning.

An object detection model using machine learning includes a you only look once (YOLO) model of a single-step scheme, a faster regions with convolution neural networks (R-CNN) model of a two-step scheme, and the like.

The you only look once (YOLO) model is a model in which an object existing in an image and a position of the corresponding object may be predicted as the image is viewed only once.

The you only look once (YOLO) model divides the original image into grids of the same size. Then, for each grid, the number of bounding boxes specified in a predefined form around a center of the grid is predicted, and reliability is calculated based on the predicted number.

Thereafter, whether the image contains the object or contains only a background may be included, and a location with high object reliability may be selected, so that an object category may be identified.

The faster regions with convolution neural networks (R-CNN) model is a model that may detect the object faster than an RCNN model and a Fast RCNN model.

The faster regions with convolution neural networks (R-CNN) model will be described in detail.

First, a feature map is extracted from the image via a convolution neural network (CNN) model. Based on the extracted feature map, a plurality of regions of interest (RoIs) are extracted. RoI pooling is performed for each region of interest.

The RoI pooling is a process of setting grids of a feature map to which the regions of interest are projected to fit a H x W size that is determined in advance and extracting the greatest value for each cell included in each grid to extract a feature map having the H x W size.

A feature vector may be extracted from the feature map having the H x W size, and identification information of the object may be obtained from the feature vector.

The image signal may be output to the display module 151 via the main controller 182 of the controller 180 and displayed.

The main controller 182 may control an on screen display (OSD) menu display for settings of the display device 100. The settings of the display device 100 may include not only screen settings (e.g., brightness, contrast, and/or sharpness settings), but also posture adjustment settings. Accordingly, the main controller 182 may control the screen settings and the posture adjustment settings. The main controller 182 may also be referred to as a posture adjustment settings controller in an aspect that the main controller 182 controls the posture adjustment settings.

When displaying a menu regarding the posture adjustment settings, the main controller 182 may display the image signal together.

The main controller 182 may receive the results of the two-dimensional facial landmark recognition and/or the three-dimensional body skeleton recognition of the user from the multimedia controller 181 and use the results in controlling the posture of the display unit.

The main controller 182 may also control the switching of the image signal switch 183. That is, when the display device 100 is in the posture adjustment mode, the main controller 182 may switch the image signal switch 183 such that the image signal is transmitted to the multimedia controller 181, and when the display device 100 is not in the posture adjustment mode, the main controller 182 may switch the image signal switch 183 such that the image signal is transmitted to the external device interface unit 112.

The image signal transmitted to the external device interface unit 112 may be transmitted to the external device 400.

The external device 400 may receive the image signal via the own external device interface unit 412 and transmit the image signal to the own external device processor 480.

The external device processor 480 may control the image signal to be displayed on an external device display module 451 of the external device 400.

In one example, the external device 400 may include an own external device camera 430, and the external device processor 480 may control an external device image signal captured via the external device camera 430 to be transmitted to the display device 100 via the external device interface unit 412.

Although a flow of the external device image signal is not shown in detail in FIG. 13, the controller 180 may control the external device image signal to be displayed on the display module 151.

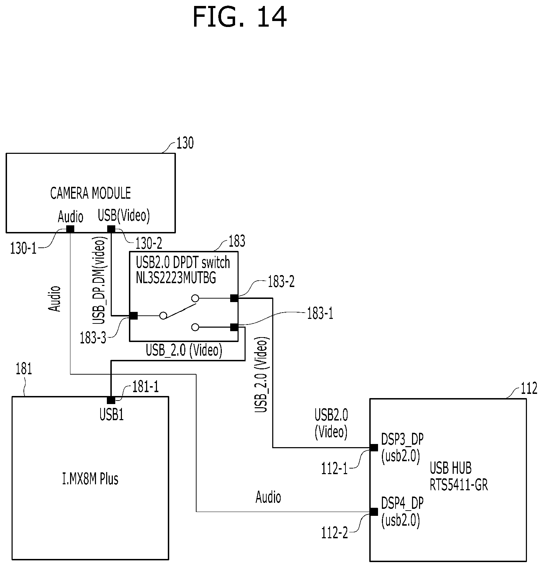

Hereinafter, with reference to FIG. 14, the transmission of the image signal and the audio signal between the camera module 130, the image signal switch 183, the multimedia controller 181, and the external device interface unit 112 in FIG. 13 will be described in more detail. FIG. 14 is a detailed block diagram on transmission of an image signal and an audio signal in FIG. 13.

The audio signal output from an audio output terminal 130-1 of the camera module 130 may be input to an audio input terminal 112-2 of the external device interface unit 112. The audio signal may be converted from the analog signal to the digital signal or from the first digital signal to the second digital signal via the codec module 184, as needed. As described above, the codec module 184 may be included in the camera module 130 or may be constructed as the separate module. In FIG. 14, the codec module 184 is illustrated as being included in the camera module 130.

The image signal output from an image output terminal 130-2 of the camera module 130 may be transmitted to an input terminal 183-3 of the image signal switch 183. The image output terminal 130-2 may be a USB output terminal.

A first output terminal 183-1 of the image signal switch 183 may be connected to an image input terminal 181-1 of the multimedia controller 181.

Accordingly, the image signal may be transmitted to the multimedia controller 181 using the image input terminal 181-1 via the input terminal 183-3 and the first output terminal 183-1 of the image signal switch 183. The image input terminal 181-1 may be a USB terminal.

A second output terminal 183-2 of the image signal switch 183 may be connected to an image input terminal 112-1 of the external device interface unit 112.

Therefore, the image signal may be transmitted to the external device interface unit 112 using the image input terminal 112-1 via the input terminal 183-3 and the second output terminal 183-2 of the image signal switch 183. The image input terminal 181-1 may be the USB terminal.

A switching operation of the image signal switch 183 is the same as described above.

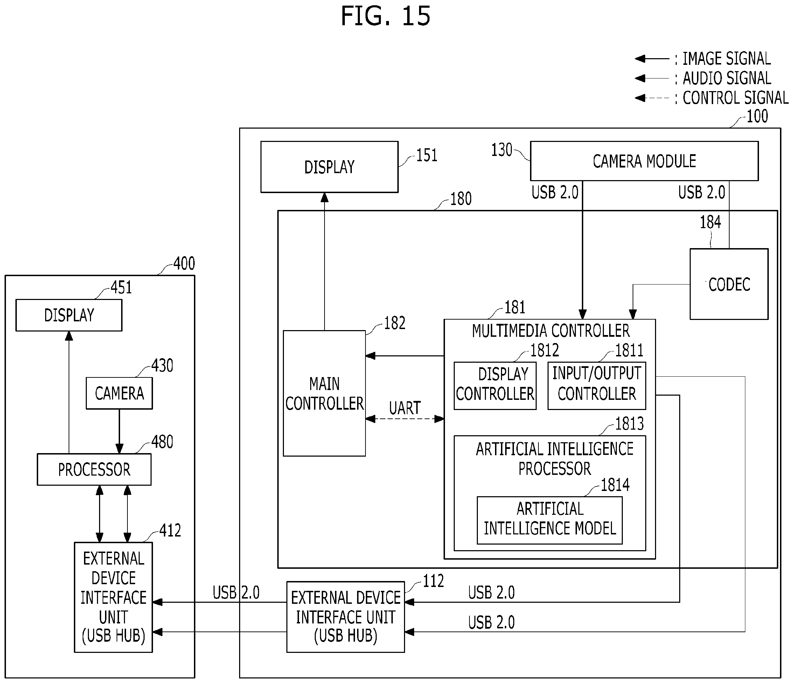

It has been described above that, via the switching of the image signal switch 183, the image signal obtained from the camera module 130 is transmitted to the multimedia controller 181 when in the posture adjustment mode, and is transmitted to the external device interface unit 112 when not in the posture adjustment mode. However, the image signal switch 183 is not necessarily required when the multimedia controller 181 utilizes the image signal obtained from the camera module 130 during the posture adjustment mode. This will be described further with reference to FIG. 15. FIG. 15 shows a block diagram according to an embodiment of the present disclosure for multimedia signal processing to perform an operation of a display device in FIG. 12.

To use the display device 100, the camera module 130 may obtain the image signal regarding the image frame (the still image or the moving image) of the user located in front of the display device 100. The color space of the image signal may be one of the RGB, the YCbCr, the YUV, the HSV, and the HIS. In this regard, the camera module 130 may obtain the audio signal regarding the user's voice and/or the surrounding sound thereof via the microphone disposed therein.

The image signal and the audio signal obtained from the camera module 130 may be transmitted to the controller 180. The image signal and the audio signal may be transmitted from the camera module 130 to the controller 180 via, for example, the universal serial bus (USB) interface scheme. In one example, the signals may be transmitted via another interface scheme (e.g., the mobile industry processor interface (MIPI)).

The controller 180 may include the multimedia controller 181, the main controller 182, and the codec module 184. That is, compared to FIG. 13, the controller 180 may not include the image signal switch 183.

The codec module 184 of the controller 180 may convert the received audio signal to the digital signal. In FIG. 13, the codec module 184 is shown as being included in the controller 180, but the codec module 184 may be constructed as the separate module independent of the controller 180 or may be included in the camera module 130.

The multimedia controller 181 within the controller 180 may receive the image signal and the digitally converted audio signal.

The multimedia controller 181 may include the input/output controller 1811, the image display controller 1812, and the artificial intelligence processor 1813.

The input/output controller 1811 may control the image signal to be transmitted to the image display controller 1812, while controlling the image signal and the audio signal to be transmitted to the external device interface unit 112. The input/output controller 1811 may control the image signal to be transmitted to the image display controller 1812 and simultaneously to the external device interface unit 112.

The image display controller 1812 may control the image signal conversion for the display of the received image signal. That is, the image display controller 1812 may convert the received image signal into, for example, the high definition multimedia interface (HDMI) image signal for the display of the received image signal. In one example, the received image signal may also be converted into the image signal of another interface scheme. The converted image signal may be transmitted directly from the image display controller 1812 to the main controller 182, or may be transmitted from the image display controller 1812 to the main controller 182 via the input/output controller 1811.

The artificial intelligence processor 1813 may receive the image signal as the input data for the inference and infer the two-dimensional facial landmark and/or the three-dimensional body skeleton of the user via an artificial intelligence model 1814. The artificial intelligence is as described above.

The image signal may be output to the display module 151 via the main controller 182 of the controller 180 and displayed.

The main controller 182 may control the on screen display (OSD) menu display for the settings of the display device 100. The settings of the display device 100 may include not only the screen settings (e.g., the brightness, the contrast, and/or the sharpness settings), but also the posture adjustment settings.

When displaying the menu regarding the posture adjustment settings, the main controller 182 may display the image signal together.

The main controller 182 may receive the results of the two-dimensional facial landmark recognition and/or the three-dimensional body skeleton recognition of the user from the multimedia controller 181 and use the results in controlling the posture of the display unit.

The image signal and the audio signal transmitted to the external device interface unit 112 may be transmitted to the external device 400.

The external device 400 may receive the image signal and the audio signal via the own external device interface unit 412 and transmit the signals to the own external device processor 480.

The external device processor 480 may control the image signal to be displayed on the external device display module 451 of the external device 400.

In one example, the external device 400 may include the own external device camera 430, and the external device processor 480 may control the external device image signal captured via the external device camera 430 to be transmitted to the display device 100 via the external device interface unit 412.

Although the flow of the external device image signal is not shown in detail in FIG. 15, the controller 180 may control the external device image signal to be displayed on the display module 151.

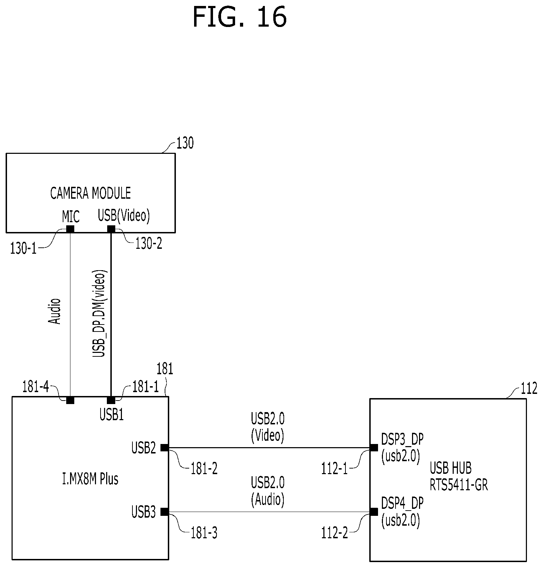

Hereinafter, with reference to FIG. 16, the transmission of the image signal and the audio signal between the camera module 130, the multimedia controller 181, and the external device interface unit 112 in FIG. 15 will be described in more detail. FIG. 16 is a detailed block diagram on transmission of an image signal and an audio signal in FIG. 15.

The audio signal output from the audio output terminal 130-1 of the camera module 130 may be input to an audio input terminal 181-4 of the multimedia controller 181. The audio signal may be converted from the analog signal to the digital signal or from the first digital signal to the second digital signal via the codec module 184, as needed. That is, the format of the digital signal may be changed. As described above, the codec module 184 may be included in the camera module 130 or may be constructed as the separate module. In FIG. 16, the codec module 184 is illustrated as being included in the camera module 130.

The image signal output from the image output terminal 130-2 of the camera module 130 may be transmitted to the image input terminal 181-1 of the multimedia controller 181. The image output terminal 130-2 and the image input terminal 181-1 may be the USB output terminals.

An image output terminal 181-2 of the multimedia controller 181 may be connected to the image input terminal 112-1 of the external device interface unit 112. Additionally, an audio output terminal 181-3 of the multimedia controller 181 may be connected to the audio input terminal 112-2 of the external device interface unit 112. Both the image input/output terminals 181-2 and 112-1 and the audio input/output terminals 181-3 and 112-2 may be the USB terminals.

Therefore, the image signal and the audio signal may be transmitted from the multimedia controller 181 to the external device interface unit 112 via the image output terminal 181-2 and the image input terminal 112-1 and via the audio output terminal 181-3 and the audio input terminal 112-2, respectively.

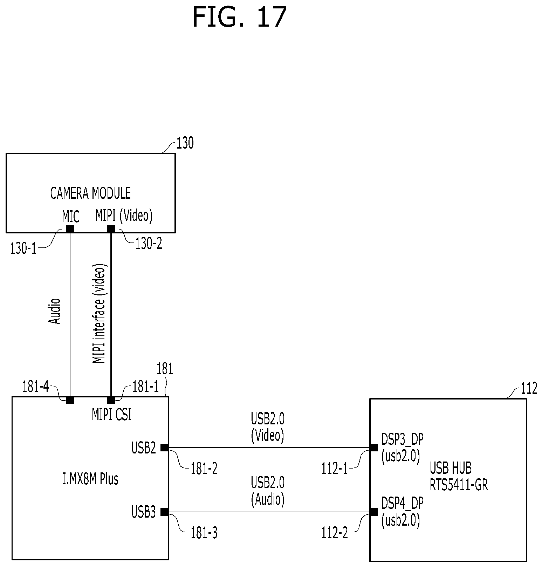

In one example, in FIG. 16, the image signal transmission between the camera module 130 and the multimedia controller 181 may be performed via the MIPI interface. This will be described further with reference to FIG. 17. FIG. 17 is a detailed block diagram on transmission of an image signal and an audio signal in FIG. 15.

The audio signal output from the audio output terminal 130-1 of the camera module 130 may be input to the audio input terminal 181-4 of the multimedia controller 181. The audio signal may be converted from the analog signal to the digital signal or from the first digital signal to the second digital signal via the codec module 184, as needed. That is, the format of the digital signal may be changed. As described above, the codec module 184 may be included in the camera module 130 or may be constructed as the separate module. In FIG. 17, the codec module 184 is illustrated as being included in the camera module 130.

The image signal output from the image output terminal 130-2 of the camera module 130 may be transmitted to the image input terminal 181-1 of the multimedia controller 181. The image output terminal 130-2 and the image input terminal 181-1 may be MIPI terminals.

The image output terminal 181-2 of the multimedia controller 181 may be connected to the image input terminal 112-1 of the external device interface unit 112. Additionally, the audio output terminal 181-3 of the multimedia controller 181 may be connected to the audio input terminal 112-2 of the external device interface unit 112. Both the image input/output terminals 181-2 and 112-1 and the audio input/output terminals 181-3 and 112-2 may be the USB terminals.

Therefore, the image signal and the audio signal may be transmitted from the multimedia controller 181 to the external device interface unit 112 via the image output terminal 181-2 and the image input terminal 112-1 and via the audio output terminal 181-3 and the audio input terminal 112- 2, respectively.

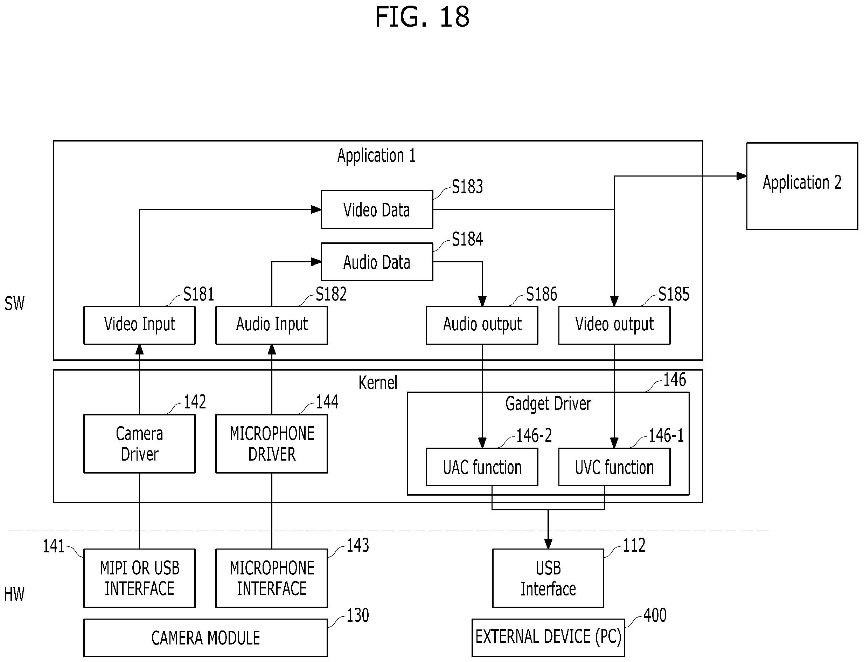

Hereinafter, with further reference to FIG. 18, aa data transmission architecture of the image signal and the audio signal will be described. FIG. 18 shows a data transmission architecture of an image signal and an audio signal according to an embodiment of the present disclosure.

The image signal and the audio signal may be generated from the camera module 130. The camera module 130 may be equipped with an image signal processor and may change the image signal into a desired digital format. The camera module 130 does not necessarily include the image signal processor. When the camera module 130 does not include the image signal processor, the image signal may be changed into the desired digital format via an image signal processor (not shown) included in the multimedia controller 181.

The image signal may be transmitted to an application layer via a MIPI or USB hardware interface 141 and a kernel layer camera driver 142. The audio signal may be transmitted to the application layer via a microphone hardware interface 143 and a kernel layer microphone driver 144.

A first application of the application layer may receive the image signal and the audio signal [S181 and S182]. The first application, as an application that may be executed on the display device 100, may use the image signal and audio signal as image data and audio data for the first application, respectively [S183 and S184].

For example, the received image signal may be used in the first application for adjusting the posture of the display unit described above. In one example, the image signal may also be used in another second application of the display device 100.

In one example, the image signal and the audio signal may be transmitted to the external device 400 via a kernel layer gadget driver 146 and an USB interface 112 [S185 and S186]. The gadget driver 146, which is for changing the image signal and the audio signal into a USB type signal, may include a USB video class (UVC) function 146-1 and a USB audio class (UAC) function 146-2.

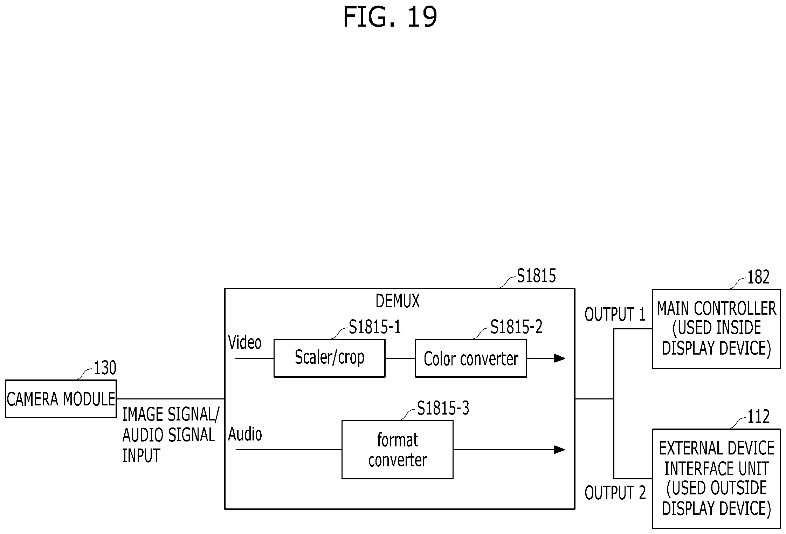

A format (e.g., a definition, a color space, and the like) of the image signal obtained by the camera module 130 may be different from a format of the image signal required in the first application. For example, a definition of the image signal obtained from the camera module 130 may be full high definition (FHD), and a definition of the image signal required by the first application may be high definition (HD). When the image definition is higher than necessary, a lot of computational resources are required, which may be detrimental to the display device 100. The display device 100 may need to change the format of the image signal obtained from the camera module 130 for the first application. This will be described further with reference to FIG. 19. FIG. 19 shows a conversion block diagram of an image signal and an audio signal according to an embodiment of the present disclosure.

The camera module 130 may obtain an image signal of a first image format and an audio signal of a first audio format. The first image format may be based on a maximum definition among image definitions that the camera module 130 may support. Alternatively, the first image format may be based on a maximum definition among image definitions requested by the external device 400 and/or the display device 100.

The image signal of the first image format and the audio signal of the first audio format may be provided to a demux module 1815 in the multimedia controller 181. The demux module 1815 is omitted in FIGS. 13 and 15. In one example, the demux module 1815 may be created as a separate module independent of the multimedia controller 181.

The demux module 1815 may convert the image signal of the first image format into an image signal of a second image format and output the same as a first output, or may output the image signal of the first image format as it is as a second output. The first output and the second output may be output alternately or simultaneously as needed.

When the image signal of the first image format is converted to the image signal of the second image format, a scaler/crop module 1815-1 in the demux module 1815 may convert the definition of the image signal and/or crop the image signal to convert the image signal into the image signal of the second format. The cropping may be used, for example, to convert a 1x zoom image signal into a 2x zoom image signal. In addition thereto or separately therefrom, a color conversion module 1815-2 in the demux module 1815 may convert the image signal into the image signal of the second format by converting a first color space of the image signal into a second color space.

In one example, the demux module 1815 may convert the audio signal of the first audio format into an audio signal of a second audio format and output the same as a first output, or may output the audio signal of the first audio format as it is as a second output. The first output and the second output may be output alternately or simultaneously as needed.

When the audio signal of the first audio format is converted into the audio signal of the second audio format, a format converter 1815-3 in the demux module 1815 may convert the audio signal of the first audio format into the audio signal of the second audio format by changing a codec scheme of the audio signal.

The first output may be transmitted to the main controller 182 and used for the first application of the display device 100.

The second output may be transmitted to the external device interface unit 112 and provided to the external device 400.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The foregoing embodiments are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

## Claims

1. A display device comprising:
a display module;
a frame-shaped cabinet located around the display module and including a camera seating portion concavely recessed in an upper portion; and
a camera module seated on the camera seating portion,
wherein the camera module includes:
a camera body including a front portion located on an upper portion of a front surface of the display module, an upper portion of the camera seating portion, and a rear portion extending downward from a rear end of the upper portion and located in a direction of a rear surface of the display module;
a camera board seated on a front surface of the front portion of the camera body; and
a camera element where the camera board is mounted,
wherein the front surface of the front portion includes an inclined surface inclined downward, allowing the camera element to capture an image diagonally downward.

2. The display device of claim 1, further comprising:
a main board located on the rear surface of the display module; and
a connection cable having one end coupled to the camera board, extending along an inner surface of the camera body, and connected to the main board.

3. The display device of claim 1, further comprising a security cover coupled to the camera body from above and covering the front portion, the upper portion, and the rear portion,
wherein the security cover is movable in a horizontal direction of the camera body and selectively covers a front surface of the camera element.

4. The display device of claim 3, further comprising:
a ferromagnetic body located in the security cover; and
a magnet located in the rear portion of the camera body and providing an attractive force to the ferromagnetic body,
wherein the magnet includes:
a first magnet coupled to the ferromagnetic body at a location where the security cover covers the camera element; and
a second magnet coupled to the ferromagnetic body at a location where the security cover exposes the camera element.

5. The display device of claim 3, wherein the security cover includes a low-friction tape attached to a surface thereof in contact with the camera body.

6. The display device of claim 1, wherein the cabinet includes cabinet side surfaces located around side surfaces of the display module and a cabinet rear surface bent from the side surfaces and located on the rear surface of the display module,
wherein the camera module includes:
a camera bracket having an upper portion coupled to the camera body and located on a rear surface of the cabinet rear surface; and
a fastening screw extending through the camera bracket and the cabinet rear surface of the cabinet and fastened to the display module.

7. The display device of claim 6, further comprising a rear cover covering the rear surface of the display module and the cabinet rear surface of the cabinet,
wherein the rear cover includes a rear fastening hook extending through the camera bracket and fastened to the cabinet rear surface.

8. The display device of claim 7, wherein a portion of the rear cover corresponding to the rear portion of the camera body is omitted,
wherein a rear surface of the rear portion forms a continuous surface with a rear surface of the rear cover.

9. The display device of claim 1, further comprising a front cover coupled to a front surface of the camera body, wherein the front cover covers the camera board and forms the front surface of the camera body,
wherein the front cover includes a transparent portion at a location corresponding to the camera element.

10. The display device of claim 1, further comprising a controller for performing adjustment of a posture of the display module using an image signal received from the camera module.

11. The display device of claim 10, wherein the controller is configured to receive the image signal using one of a universal serial bus (USB) interface scheme and a mobile industry processor interface (MIPI) interface scheme and use the image signal in performing the posture adjustment of the display device.

12. The display device of claim 11, wherein the image signal obtained from the camera module has a first image format,
wherein the controller is configured to:
convert the first image format of the image signal into a second image format; and
control the image signal of the second image format to be used in performing the posture adjustment.

13. The display device of claim 12, further comprising an external device interface unit for providing the image signal of the first image format to an external device,
wherein the controller further includes a multimedia controller for changing the format of the image signal.

14. The display device of claim 13, further comprising an image signal switch for selectively providing the image signal of the first image format to one of the multimedia controller and the external device interface unit.

15. The display device of claim 14, wherein the image signal switch is switched such that the image signal is be provided to the multimedia controller while performing the posture adjustment,
wherein the image signal switch is switched such that the image signal is provided to the external device interface unit while not performing the posture adjustment.

16. The display device of claim 14, further comprising a codec module for converting a format of an audio signal obtained from the camera module,
wherein the audio signal whose format has been converted by the codec module is transmitted to the external device interface unit.

17. The display device of claim 13, wherein the controller further includes a posture adjustment controller,
wherein the multimedia controller is configured to:
provide the image signal of the first image format to the external device interface unit; and
control the image signal of the second image format to be provided to the posture adjustment controller.

18. The display device of claim 17, further comprising a codec module for converting a format of an audio signal obtained from the camera module,
wherein the audio signal whose format has been converted by the codec module is transmitted to the external device interface unit via the multimedia controller.

19. The display device of claim 12, wherein the controller is configured to control the image signal of the second image format to be displayed on the display module while performing the posture adjustment.

20. The display device of claim 19, further comprising a posture adjustment driver for adjusting the posture of the display module,
wherein the controller is configured to control the posture adjustment driver such that the posture of the display module matches a posture of a user inferred by an artificial intelligence model from the image signal of the second image format.
